# EUROPEAN PATENT APPLICATION

(11) **EP 3 687 114 A1**
(43) Date of publication of application: **29.07.2020**
(21) Application number: 18858771.1
(22) Date of filing: 25.09.2018
(51) Int. Cl.: H04L 12/26, H04L 12/70

(54) **HANDLING METHOD, SYSTEM, DEVICE AND STORAGE MEDIUM FOR SIGNAL DEGRADATION FAILURE**

(30) Priority: 22.09.2017 CN 201710869128
(71) Applicant: ZTE Corporation, Shenzhen, Guangdong 518057 (CN)
(72) Inventor: LIU, Yuhui, Shenzhen Guangdong 518057 (CN)
(74) Representative: Blumbach · Zinngrebe Patentanwälte PartG mbB
(86) International application number: PCT/CN2018/107383
(87) International publication number: WO 2019/057211

(57) **Abstract**

Provided in the present disclosure is a handling method, a system, a device, and a computer readable storage system for signal degradation failure. When an error condition acquired from a physical port satisfies a preset signal degradation determination condition, generating port indication information indicating that the physical port signal is degraded; such that rapid identification of path signal degradation is achieved. If a network is established by tunnel technology, sending the port indication information to a corresponding tunnel end node; obtaining the status of primary and standby tunnels in each group of tunnels; if both the primary and standby tunnels are unavailable, triggering pseudowire fast reroute in a Layer 2 VPN network, and triggering VPN fast reroute in a Layer 3 VPN network. If the network is established by nontunnel technology, switching service on a label-switched path via a Layer 3 interface of the physical port to a corresponding secondary label-switched path for transmission.

## Description

### TECHNICAL FIELD

The present disclosure relates to the field of communication technologies, and particularly relates to a method, system, and computer readable storage medium device for handling signal degradation and fault.

### BACKGROUND

Current networking technologies of domestic and foreign mainstream operators mainly include Layer 2 Virtual Private Network (L2VPN), Layer 3 Virtual Private Network (L3VPN). An outer Label switching path (LSP) adopts a Resource ReSerVation Protocol-Traffic Engineering (RSVP-TE) tunnel, a Label Distribution Protocol (LDP) tunnel or a static manual tunnel. For the L2VPN, an inner layer mainly includes static pseudowires (PWs) or dynamic PWs created by means of a dynamic LDP. For the L3VPN, an inner layer mainly includes VPN channels established by mean of a Multiprotocol Extensions for BGP-4 (MP-BGP) or other manners, and the main protection technologies involved therein include Internet Protocol Fast Reroute (IP FRR), VPN FRR, PW FRR, hot standby (Hotstandby TE) HSB, Label Distribution Protocol (LDP) FRR, and static tunnel protection group switching technology.

Most of the current fault detection methods for network deployment are mainly Bi-directional Forwarding Detection (BFD) technologies. BFD can quickly detect interface and link faults on a forwarding path, forwarding engine faults of a node and the like, and notify an upper layer protocol of the fault so that the upper layer protocol can converge quickly. For a static PW or static manual tunnel scenario, a Multi-Protocol Label Switching Transport Profile- Operation Administration & Maintenance (TP-OAM) mode may be used for the detection.

The work mechanism of BFD or TP-OAM involves periodically transmitting a packet to a fixed point, and determining a fault status in a case where three consecutive packets are not received. Such work mechanism can well detect link interruption, but has no effect on discontinuous packet loss. However, common line signal degradation is just a fault mode of discontinuous and random bit error and packet loss. If two consecutive detecting packets are not received but a third one is received, BFD or TP-OAM will not consider it as a link fault. However, at this time, the upper layer traffic has actually been affected. In addition, under this condition BFD or TP-OAM tends to vibrate, causing frequent switching back and forth of the service path in a very short time, and thus affecting normal operation of the service.

Therefore, in some cases, there lacks a method for sensing and handling Signal Degradation (SD) to compensate for the deficiencies of BFD or TP-OAM processing and to satisfy deployment requirements for services which are sensitive to line signal degradation.

### SUMMARY

In an embodiment of the present disclosure, there is provided a method for handling signal degradation and fault, including the steps of: obtaining a bit error condition of a physical port, determining whether the physical port satisfies a preset signal degradation determination condition according to the bit error condition, and if yes, generating port indication information indicating signal degradation of the physical port; transmitting the port indication information to an end node of a tunnel in a case where a network to which the physical port belongs is networked by a tunnel networking technology, the physical port being located at the tunnel; determining, in a case where an end node of a certain tunnel receives the port indication information, that the tunnel is in signal degradation status; obtaining status of primary and backup tunnels in each tunnel group, and, when a certain tunnel group satisfies the condition that the primary tunnel is in signal degradation status or signal interruption status and the backup tunnel is in signal degradation status, triggering pseudowire fast reroute in a case where the network is an L2VPN network, so as to switch services on respective pseudowires of the tunnel group to corresponding backup pseudowires for transmission; and triggering VPN fast reroute in a case where the network is an L3VPN network, so as to switch services on respective VPN channels of the tunnel group to corresponding backup VPN channels for transmission; and determining, in a case where the network to which the physical port belongs is networked by a non-tunnel networking technology, an L3 interface on the physical port, triggering label distribution protocol fast reroute, and switching services on a label switching path passing through the L3 interface to a corresponding backup label switching path for transmission.

In an embodiment of the present disclosure, there is further provided a system for handling signal degradation and fault, including: a port detection module configured to obtain a bit error condition of a physical port, determine whether the physical port satisfies a preset signal degradation determination condition according to the bit error condition; and if yes, generate port indication information indicating signal degradation of the physical port; a tunnel transmission module configured to transmit the port indication information to an end node of a tunnel in a case where a network to which the physical port belongs is networked by a tunnel networking technology, the physical port being located at the tunnel; a tunnel status setting module configured to determine, in a case where an end node of a certain tunnel receives the port indication information, that the tunnel is in signal degradation status; a tunnel protection module configured to obtain status of primary and backup tunnels in each tunnel group; a VPN protection processing module configured to, when a certain tunnel group satisfies the condition that the primary tunnel is in signal degradation status or signal interruption status and the backup tunnel is in signal degradation status, trigger pseudowire fast reroute in a case where the network is an L2VPN network, so as to switch services on respective pseudowires of the tunnel group to corresponding backup pseudowires for transmission; and trigger VPN fast reroute in a case where the network is an L3VPN network, so as to switch services on respective VPN channels of the tunnel group to corresponding backup VPN channels for transmission; and a path protection module configured to determine, in a case where the network to which the physical port belongs is networked by a non-tunnel networking technology, an L3 interface on the physical port, trigger label distribution protocol fast reroute, and switch services on a label switching path passing through the L3 interface to a corresponding backup label switching path for transmission.

The present disclosure further provides a device for handling signal degradation and fault, including a processor and a memory, the memory having a program code stored thereon which, when executed by the processor, causes the method for handling signal degradation and fault according to the embodiments of the present disclosure to be implemented.

The present disclosure further provides a computer readable storage medium having one or more programs stored thereon which, when executed by a processor, causes the method for handling signal degradation and fault according to the embodiments of the present disclosure to be implemented.

### BRIEF DESCRIPTION OF DRAWINGS

Fig. 1 is a flowchart of a method for handling signal degradation and fault according to an embodiment of the present disclosure;
Fig. 2 is a schematic diagram showing encapsulation of a Link Layer Discovery Protocol (LLDP) private Type/Length/Value (TLV) according to an embodiment of the present disclosure;
Fig. 3 is a flowchart of a method for handling signal degradation and fault in an L2VPN scenario using static manual tunnel networking according to an embodiment of the present disclosure;
Fig. 4 is a flowchart of a method for handling signal degradation and fault in an L3VPN scenario using static manual tunnel networking according to an embodiment of the present disclosure;
Fig. 5 is a schematic diagram showing transfer of the SD status under the static tunnel networking in the methods of Fig. 3 and Fig. 4 according to the present disclosure;
Fig. 6 is a flowchart of a method for handling signal degradation and fault in an L2VPN scenario using dynamic tunnel networking according to an embodiment of the present disclosure;
Fig. 7 is a flowchart of a method for handling signal degradation and fault in an L3VPN scenario using dynamic tunnel networking according to an embodiment of the present disclosure;
Fig. 8 is a schematic diagram showing transfer of the SD status under the dynamic tunnel networking in the methods of Fig. 6 and Fig. 7 according to the present disclosure;
Fig. 9 is a flowchart of a method for handling signal degradation and fault in an IP public network, L2VPN, or L3VPN scenario using a non-tunnel networking technology such as LDP and LSP, according to an embodiment of the present disclosure; and
Fig. 10 is a schematic diagram of a system for handling signal degradation and fault according to an embodiment of the present disclosure.

### DETAILED DESCRIPTION

For clarity and better understanding of the objects, technical solutions and advantages of the disclosure, embodiments of the present disclosure will be described in further detail with reference to the following detailed description and accompanying drawings. It will be appreciated that the specific embodiments described herein are merely for illustration of the present disclosure and are not intended to limit the present disclosure.

In some cases, for a virtual private network, data packets are transmitted from one end to the other to check whether the network between the two ends is smooth and it is determined that the network has an error if three consecutive packets are lost. However, this determining rule is not sensitive enough to network degradation, cannot identify network degradation easily, and tends to cause the problems of reduced signal transmission quality and poor user experience. With the method in the embodiment of the disclosure, signal degradation of a physical port in various networks can be quickly and accurately detected, while tunnels, pseudowires, paths and the like for signal transmission are protected.

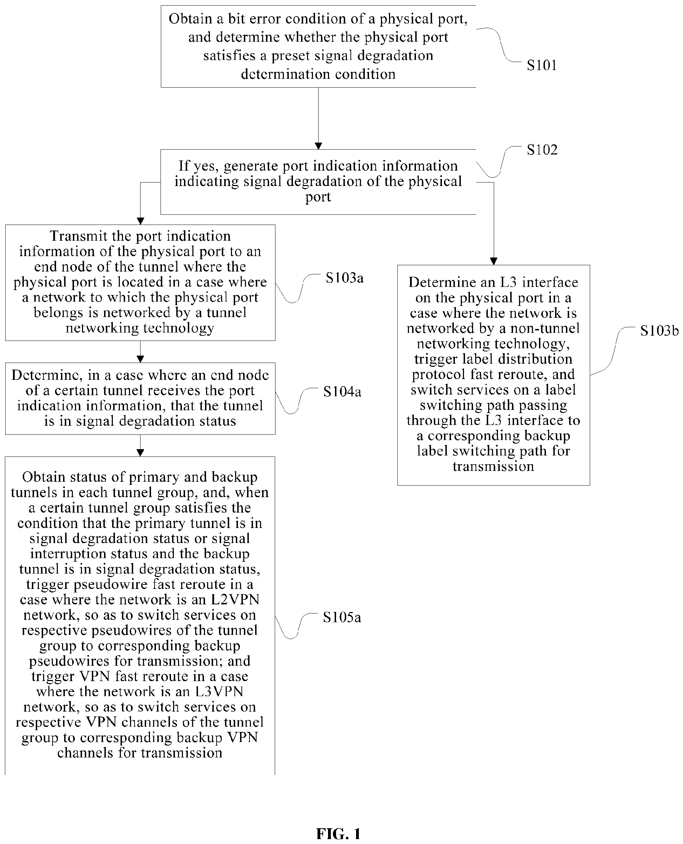

As shown in Fig. 1, the method for handling signal degradation and fault in the embodiment of the disclosure includes the following steps S101 to S105a.

At step S101, obtaining a bit error condition of a physical port, determining whether the physical port satisfies a preset signal degradation determination condition according to the bit error condition, and if yes (i.e., the result of determination is Yes), proceeding to S102.

In an embodiment of the present disclosure, the network to which the physical port belongs may be an IP network, a virtual private network (VPN), or the like. The networking mode of the IP network or the VPN is not limited, where the VPN network may be an L2VPN, an L3VPN, or the like, which is not limited herein.

The bit error condition in the embodiment of the disclosure reflects quality of a physical path on the physical port. The bit error condition may be evaluated by indexes such as a bit error rate, a packet error rate and the like.

In an embodiment of the present disclosure, a Cyclic Redundancy Check (CRC) method may be used for detection on the physical port, and a current bit error rate is calculated according to a ratio of the number of the received CRC error packets to the total number of packets per unit time. Alternatively, a bit error rate of each packet is detected on the physical port. It is determined that the packet is a bit error packet when the bit error rate is not zero, and the packet error rate is calculated according to the number of error packets received and the total number of data packets per unit time.

Typically, there is a large enough quantity of user service traffic on a line to serve as a basis for the calculation of the bit error rate or packet error rate. In special cases, however, the user service traffic may be very small. For example, when the user traffic is switched to a backup line through a protection switching mechanism, the original line has no user service traffic, but only small protocol packet traffic. According to the statistical characteristics, the larger the range of statistical samples, the closer the bit error/packet error rate calculation is to the actual value. When the line traffic is too small, the bit error/packet error rate calculation will be distorted and cannot reflect the real line condition, and thus is not sufficient to support the determination of random bit error and packet loss fault of the line. In order to continue to obtain effective bit error rates on the physical line, the embodiment of the disclosure introduces a background flow mechanism into the system.

In an embodiment, before the step S101, the method further includes: obtaining service traffic on a physical path, and transmitting, in a case where the service traffic is smaller than a preset traffic threshold, background flow packets with a preset fixed format on the physical path, wherein the maximum transmitting quantity of the background flow packets does not exceed a preset proportion of a bandwidth of the physical port.

In an embodiment, the preset ratio may be 30%, 40%, or the like. Specifically, before the step S101, in a case where the service traffic on a certain physical path is smaller than the preset traffic threshold, and after the physical port enables an SD function, the system transmits background flow packets in a preset fixed format (e.g., Ethernet packets with a destination MAC address including only 0) in the transmitting direction of the physical line, so as to increase the radix of statistical samples of data packets on the physical port. The maximum transmitting quantity of the background flow packets is no more than 30% of the port bandwidth. In order to avoid the problem of resource occupation caused by background flow traffic when the physical path recovers to normal service traffic, in the embodiment of the present disclosure, after transmitting the background flow packets, the method further includes: inquiring a traffic rate of the physical port at regular time, adjusting the transmitting bandwidth dynamically, and stopping transmitting the background flow packets when the actual traffic (user service traffic and non-background flow packets) is greater than 30% of the port bandwidth.

It will be appreciated that the background flow packets have no other significance for the line receiving end except for calculation of the bit error/packet error rate, so in a line receiving direction, the system identifies the background flow packets, and selects an abnormal procedure to discard the background flow packets. While displaying the statistic data of interface traffic, the line transmitting direction system and the line receiving direction system correct a user service traffic value and shield the SD background flow packets by regularly inquiring the statistic data of interface data packet and the background flow statistic data.

In an embodiment, the method, for obtaining the bit error condition of the physical port and determining whether the physical port satisfies the preset signal degradation determination condition according to the bit error condition, may be implemented by, but is not limited to, at least one of the following two modes.

Mode I: obtaining bit error rates of the physical port in N consecutive times before the current time, and determining that the physical port satisfies the preset signal degradation determination condition in a case where the bit error rates of the N times all exceed a preset bit error rate threshold value corresponding to line signal degradation; determining otherwise that the physical port does not satisfy the signal degradation determination condition.

In an embodiment, the calculation of the bit error rate may be performed every 1S, and at every second, the bit error rate within the current second is calculated.

Mode II: obtaining packet error rates of the physical port in N (N is greater than or equal to a preset quantity value) different time periods traced back from the current moment, and determining that the physical port satisfies the preset signal degradation determination condition in a case where the packet error rate in at least a certain time period is greater than or equal to a preset packet error rate threshold corresponding to the time period; determining otherwise that the physical port does not satisfy the signal degradation determination condition.

For example, the number of bit error packets (the bit error packets may be determined according to the bit error condition of the data packets) and the total number of packets on the physical port are read every 1 second and recorded and stored. The packet error rates of the physical line, which are respectively accumulated at the current time within time periods traced back to 1s, 10s, 100s and 1000s before the current time, are calculated every second and compared with the threshold values. It is determined that the physical port satisfies the preset signal degradation determination condition if the packet error rate calculated in any of these time periods exceeds the corresponding preset packet error rate threshold. Assuming that the calculation equation of the packet error rate threshold set by the user is n*10^-m (i.e., n*10^{-m}), then the predetermined packet error rate thresholds corresponding to the respective time periods are n*10^-2, n*10^-3, n*10^-4, and n*10^-5, and an accuracy of the predetermined packet error rate thresholds must be less than or equal to m. For example, if m = 4, then the accuracy of the preset packet error rate threshold n*10^-5 should not be used.

At step S102, generating port indication information indicating signal degradation of the physical port; proceeding to S103a in a case where the network to which the physical port belongs is networked by a tunnel networking technology, otherwise, turning to step S103b.

In an embodiment, the port indication information of the physical port includes, but is not limited to, signal receiving direction SD (RX-SD) status and alarm.

It will be appreciated that the quality of the physical line may increase with time, with changes in physical environment, etc., and in order to control the quality of the physical path, the information on the quality improvement of the physical path is transmitted to the system in time so as to facilitate use of the physical path. In an embodiment of the present disclosure, after the step S101, at least one of the following two modes may be used for determining whether to cancel the port indication information indicating signal degradation of the physical port.

Mode I: continuing to obtain the bit error condition of the physical port, and in a case where none of the bit error rates of the physical port in M consecutive times (M is a value more than at least a preset times of N) reaches the preset bit error rate threshold values, cancelling the port indication information indicating signal degradation of the physical port.

With respect to the number of observations N in the fault generation mechanism, M as used herein is typically at least on the order of 100 times or more than N. Cancelling the port indication information indicating signal degradation of the physical port includes cancelling the port RX-SD status and alarm of the physical port.

Mode II: continuing to obtain the packet error rates of the physical port in S (S is greater than or equal to a preset quantity value) different time periods traced back from the current moment, and in a case where the packet error rate in each time period is less than a preset packet error rate threshold corresponding to the time period, cancelling the port indication information indicating signal degradation of the physical port.

Specifically, the packet error rates of the line, which are respectively accumulated at the current time within a time period traced back to 1s, 10s, 100s and 1000s before, are calculated every second and compared with the threshold values, and the port RX-SD status and alarm are cancelled only when the packet error rates of "all the time periods" are lower than the corresponding threshold values at the same time. Assuming that the threshold set by the user is n*10^-m, the preset packet error rate thresholds corresponding to the above time periods are n*10^-(m-3), n*10^-(m-2), n*10^-(m-1) and n*10^-m, respectively. The accuracy of the preset packet error rate thresholds must be less than or equal to m. For example, if m = 4, then the preset packet error rate threshold n*10^-5 should not be used.

In an embodiment, in order to make the RX-SD status and alarm information also available to a system on the signal transmitting end (transmitter system), The transmitter system may be notified after the RX-SD status and alarm are generated on the physical port. Specifically, after generating the port indication information indicating signal degradation of the physical port, the method further includes: transmitting the port indication information of the physical port of a local system to a peer system in a line transmitting direction via a preset protocol packet. The preset protocol packet may be an underlying protocol packet such as a Link Layer Discovery Protocol (LLDP) packet, which has better universality and may be used favorably for enhancing universality and adaptability of the method for the embodiment of the present disclosure. However, it will be appreciated that the preset protocol packet in the embodiment of the present disclosure is not limited to the underlying protocol packet, but may also be a non-underlying protocol packet.

Specifically, for directly connected peer systems in the line transmitting direction, unidirectional SD fault (determined in step S102) generated at the local system is sensed through LLDP. After the RX-SD status and alarm are generated at the local system, an LLDP notification packet is transmitted to the peer system, where the LLDP notification packet contains a private Type Length Value (TLV) carrying an RX-SD fault generation status bit. The peer system receives the LLDP notification packet and generates transmitting direction SD (TX-SD) status and alarm.

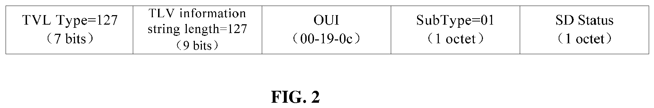

An example of encapsulation of the LLDP private TLV is shown in Fig. 2, where SD Status = 0, indicating that no SD alarm occurs, while SD Status = 2 representing that an SD alarm occurs. The encapsulation includes: a TLV Type, a TLV information string length, an organizationally unique identifier (OUI), a SubType, and SD status. The values shown in Fig. 2 are exemplary.

Apparently, other protocol packets may also be used for transmitting the SD status and alarm in the embodiments of the present disclosure, which are not limited herein.

In an embodiment, after determining that the SD status and alarm on a local physical port are cancelled in the manner described above, the local system may notify the peer system of the information by transmitting an LLDP notification packet (at this time, SD Status = 0) to the peer system, and when the peer system receives the RX-SD fault recovery status bit again via the LLDP protocol, it is determined that the TX-SD alarm disappears.

After the peer system is notified of the SD status and alarm of the physical port, the systems of the transmitting end and the receiving end may trigger subsequent procedures to perform tunnel protection.

At step S103a, transmitting the port indication information of the physical port to an end node of a tunnel, where the physical port is located, in a case where a network to which the physical port belongs is networked by a tunnel networking technology.

In an embodiment, the port indication information of the physical port may be transmitted to the end node of the tunnel at which tunnel the physical port is located by a protocol packet transmitted over the network or the like.

For static tunnel networking and dynamic tunnel networking, the specific steps of transmitting the port indication information to the end node of the tunnel at which tunnel the physical port is located are different.

In the case of static tunnel networking, the step of transmitting the port indication information to the end node of the tunnel at which tunnel the physical port is located includes: notifying the port indication information of the physical port to a Transport-layer Multi-Protocol Label Switching (T-MPLS) Section entity which is mapped toward an inner layer of the network and to the tunnel (a static tunnel); notifying the port indication information of the physical port to the tunnel, and then to a Multi-Protocol Label Switching-Transport Profile Operation Administration and Maintenance (MPLS-TP OAM) entity, checking a position of the MPLS-TP OAM entity in the network, and transmitting, in a case where the MPLS-TP OAM entity is in an intermediate node of the tunnel, a preset custom packet carrying the node ID of the intermediate node and the signal degradation status indication information to the end node of the tunnel via other nodes (e.g., other intermediate nodes) of the tunnel. In an example, the predefined packet may also carry bit error rate/packet error rate information.

In the L2VPN, a pseudowire is further arranged on the static tunnel. When the SD needs to be sensed by the pseudowire, a mapping from the tunnel to the pseudowire may be performed so that the pseudowire is notified of the port indication information of the physical port. If the TP-OAM entity is in an intermediate node of the pseudowire, it transmits a preset custom packet carrying the node ID of the node and the signal degradation status indication information to the end node of the pseudowire via an intermediate node of the pseudowire. In an example, the predefined packet may also carry bit error rate /packet error rate information.

In an embodiment, the preset custom packet may be a custom Forward Error Indication (FEI) packet or a packet in other formats. When the TP-OAM entity is in an intermediate node of a tunnel or of a Multi-Segment Pseudo-Wire (MSPW), the node where the physical port is located may transmit to a downstream node a FEI packet which carries information including a NODE ID of the node (filled with a device MAC address of the node), SD status indication (port TMS indication for an LSP FEI packet; and tunnel SD indication for a PW FEI packet), and bit error rate information. By transmitting the FEI packet to the downstream nodes, the end node of the static tunnel or of the pseudowire knows that the end node itself is in SD status.

In an embodiment, in order for more accurate determination, accumulation of the bit error/packet error rates transmitted by the respective nodes may be performed on the end node of the static tunnel. As long as one of the NODE IDs generates a corresponding SD status, the bit error/packet error rate accumulation is not necessary, and it is determined that the static tunnel or static PW is in SD status. On the other hand, in a case where there is no SD status indication in any of the NODE IDs, an SD alarm is generated if an average of the accumulated bit error/packet error rates is greater than an SD threshold configured on a Maintenance Entity Group (MEG); and it is determined that the static tunnel or static PW is in SD status, and the static tunnel or static PW is associated to perform corresponding protection switching decision and processing.

In a case where the bit error rate is 0, the TP-OAM cancels transmission of the FEI packet. The FEI packet is a custom private packet in the format of a TP-OAM packet, where an OpCode field is defined as 0x60.

In the case of dynamic tunnel networking, the step of transmitting the port indication information to the end node of the tunnel at which tunnel the physical port is located includes: setting the L3 interface on the port to signal degradation status, setting the label switching path passing through the L3 interface to signal degradation status, and transmitting a message with a preset format and containing information indicating signal degradation of the label switching path to a head node of the tunnel (i.e., a TE tunnel) where the physical port is located. The L3 interface may also be referred to herein as a Layer 3 interface or an L3 port.

Specifically, in the case of dynamic tunnel networking, the RSVP protocol may sense SD status of the Layer 3 interface, and transmit path information of the LSP passing through the Layer 3 interface and corresponding SD status information to the head node of the TE tunnel via a Notify message. After receiving the SD status of the LSD, the head node of the TE tunnel performs corresponding protection switching decision and processing. Apparently, it will be appreciated that in an example of the embodiment of the present disclosure, the LSP information and SD status may also be transmitted in the manner of other messages or protocol packets, which are not limited herein.

At step S104a, determining, in a case where an end node of a certain tunnel receives the port indication information, that the tunnel is in signal degradation status.

The purpose of this step is to set the tunnel to which the physical port belongs to signal degradation status according to the RX-SD status of the physical port. This step may be implemented by monitoring the end node of the tunnel.

At step S105a, obtaining status of primary and backup tunnels in each tunnel group, and, when a certain tunnel group satisfies the condition that the primary tunnel is in signal degradation status or signal interruption status and the backup tunnel is in signal degradation status, triggering pseudowire fast reroute in a case where the network is an L2VPN network, so as to switch services on respective pseudowires of the tunnel group to corresponding backup pseudowires for transmission; and triggering VPN fast reroute in a case where the network is an L3VPN network, so as to switch services on respective VPN channels of the tunnel group to corresponding backup VPN channels for transmission.

In the case of static tunnel networking, there is usually provided a static tunnel protection group including a primary tunnel and a backup tunnel. In dynamic networking, however, a TE tunnel is provided with a primary path and a backup path, which may be respectively regarded as a primary tunnel and a backup tunnel, while the TE tunnel may be regarded as a tunnel group.

In the case of static tunnel networking, when the SD status appears in the primary or the backup tunnel, the static tunnel/static tunnel protection group may be linked to perform corresponding processing. That is, after the status of the primary and backup tunnels is obtained in S105, if it is determined that a tunnel in operation (the tunnel currently carrying user service flow) in a certain tunnel group is in SD or Signal Fail (SF) status, while other tunnels are not in SD or SF status, the service flow of the tunnel in operation is switched to other tunnels; and if all tunnels in the tunnel protection group are in poor status, for example, the primary and backup tunnels are in SF status and SD status respectively, or both the primary and backup tunnels are in SD status, further upper layer protection is required at this time for normal transmission of the service flow. If the network of the static tunnel networking is an L2VPN network, pseudowire fast reroute is triggered, so as to switch services on respective pseudowires of the tunnel group to corresponding backup pseudowires for transmission; and if the network of the static tunnel networking is an L3VPN network, VPN fast reroute is triggered, so as to switch services on respective VPN channels of the tunnel group to corresponding backup VPN channels for transmission.

In the case of dynamic tunnel networking (RSVP-TE), after the SD status is generated on the physical port, the physical port cooperates with the RSVP-TE tunnel to perform corresponding processing, and after the SD status is generated on the physical port, the SD status will be obtained by the head node of the TE tunnel via the above steps S103a and S104a. If SD occurs in both the primary path and a hot standby path of the TE tunnel, or SF occurs in the primary path and SD occurs in the hot standby path, it means that the TE tunnel cannot perform normal service transmission, and thus further upper layer protection is required at this time for normal operation of the service flow. If the network networked by the dynamic tunnel is an L2VPN network, pseudowire fast reroute is triggered, so as to switch services on respective pseudowires of the tunnel group to corresponding backup pseudowires for transmission; and if the network networked by the dynamic tunnel is an L3VPN network, VPN fast reroute is triggered, so as to switch services on respective VPN channels of the tunnel group to corresponding backup VPN channels for transmission.

In an embodiment of the present disclosure, no matter in a static networking scenario or a dynamic networking scenario, in order to enable the system to intuitively know the status of the tunnel group , when a certain tunnel group satisfies the condition that the primary tunnel is in signal degradation status or signal interruption status and the backup tunnel is in signal degradation status, before the step of triggering pseudowire fast reroute or triggering VPN fast reroute, the method further includes: setting a next hop of all routes whose egress interface is the tunnel group to signal degradation status.

At step S103b, determining an L3 interface on the physical port in a case where the network is networked by a non-tunnel networking technology, triggering label distribution protocol fast reroute, and switching services on a label switching path passing through the L3 interface to a corresponding backup label switching path for transmission.

In practice, on the path, data may be received and transmitted by a physical port, or by an Ethernet binding port (SmartGroup (SG, also called Trunk interface), LAG interface, or Link Aggregation Group). In order to facilitate management of the SG interface, in an embodiment of the present disclosure, the step of obtaining the bit error condition of the physical port, and determining whether the physical port satisfies the preset signal degradation determination condition according to the bit error condition further includes: obtaining bit error conditions of respective member ports of an Ethernet binding port, determining whether the respective member ports satisfy a preset signal degradation determination condition according to the bit error condition, and if yes, setting the member ports to Block status; or moving, in a case where the number of aggregated links available on the Ethernet binding port is greater than a minimum number of member links, the member ports out of the link aggregation group; reserving, in a case where the number of aggregated links available on the Ethernet binding port is equal to the minimum number of member links, the member ports in the link aggregation group for continuous use, and setting the Ethernet binding port to signal degradation status; and wherein if it is also detected that signal interruption status occurs on other member ports of the Ethernet binding port, then in a case where the number of aggregated links available on the Ethernet binding port is equal to the minimum number of member links, moving the member ports satisfying the preset signal degradation determination condition into the link aggregation group to replace the member ports in the signal interruption status, and setting the Ethernet binding port to signal degradation status.

In an embodiment, when the SD status and alarm occur on the physical port, in order to notify the upper layer of the signal transmission quality of the corresponding route, so as to select a better routing path for service transmission, in an embodiment of the present disclosure, after the step S102 of generating the port indication information indicating signal degradation of the physical port, the method further includes: determining an L3 interface on the physical port, setting the L3 interface to signal degradation status, and increasing overhead of a route whose egress interface is the L3 interface to a preset overhead value.

The above steps may be implemented by performing corresponding processing by using an Interior Gateway Protocol (IGP) linked after the SD status is generated on the physical port. Specifically, the physical port generates SD status and alarm, and sets the Layer 3 interface on the physical port to SD status, and the IGP protocol senses the SD status of the L3 interface and increases an overhead value of the route whose egress interface is the L3 interface to a preset overhead value. In an example, the incremental value of the overhead may be set by the user. In another example, the overhead value of the route may be adjusted directly to a maximum value (65535 in an Open Shortest Path First (ospf) protocol, and 16777214 in an Intermediate system to intermediate system (isis) protocol).

In an embodiment of the present disclosure, after the SD status and alarm of a certain physical port are cancelled, the SD status of the L3 interface on the physical port is also cancelled (which can be sensed and performed by the IGP protocol), then the overhead value of the route is restored to the previously configured value or a default value.

It will be appreciated that in an embodiment, in order for better management when SF status occurs on the line, before it is determined that the tunnel or the tunnel which the pseudowire belongs to is in signal degradation status, if the SF status is detected on the routing path where the physical port is located, processing is performed according to a procedure corresponding to the SF status, and if no SF status is detected, it is further detected whether the SD status is present on the routing path, and if yes, a procedure corresponding to the SD status is performed.

In the method for handling signal degradation and fault of the embodiments of the present disclosure, by obtaining a bit error condition of a physical port, whether the physical port satisfies a preset signal degradation determination condition according to the bit error condition is determined, so as to sense SD status of the line signal, and if yes, port indication information indicating signal degradation of the physical port is generated, and rapid sensing of path signal degradation is achieved. The present disclosure provides protection processing for services on tunnels and label switching paths when SD status occurs in both the tunnel networking technology and the non-tunnel networking technology. A method for sensing and handling signal degradation and fault is provided for various scenarios and networking scenes, which makes up for the lack of a method for sensing and processing signal degradation and fault. In addition, in the embodiments of the present disclosure, by means of the method for determining the port SD status through the bit error rate or packet error rate, and the introduction of the background flow packets, the calculation accuracy of the bit error rate and the packet error rate is improved, the accuracy in the determination of the SD status on the path is enhanced, and the accuracy in the switching between tunnels or label switching paths is increased.

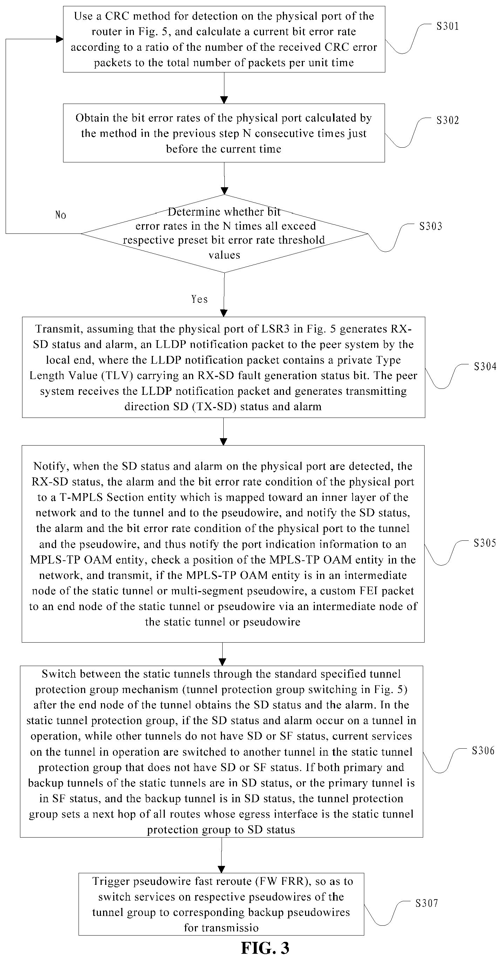

A method for handling signal fault and degradation used in various common scenarios will now be exemplarily described with reference to Figs. 3 to 9.

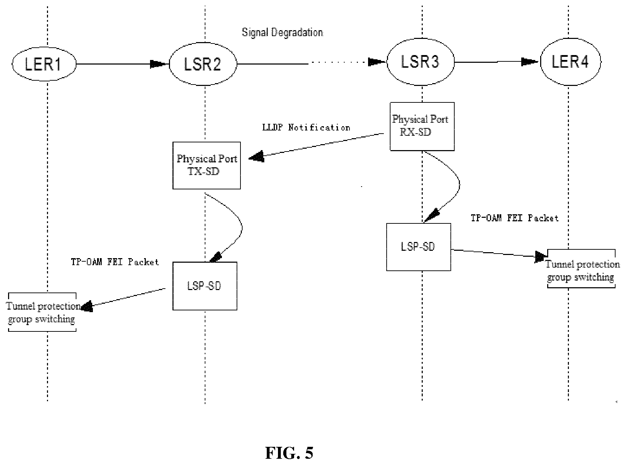

A method for sensing and handling signal degradation and fault under static manual tunnel networking in an L2VPN scenario is exemplarily described with reference to Figs. 3 and 5. Fig. 5 is a schematic diagram of SD status transfer under static tunnel networking according to an embodiment of the present disclosure. In Fig. 5, there is a Label Edge Router (LER) and a Label Switching Router (LSR). The unidirectional tunnel in Fig. 5 is a tunnel LER1-LSR2-LSR3-LER4. Fig. 5 mainly shows a tunnel transmission mode, and the SD transmission mode of the multi-segment pseudowire is similar thereto.

Referring to Fig. 3, Fig. 3 shows a procedure of a method for handling signal degradation and fault under an L2VPN scenario in static manual tunnel scenario according to an embodiment of the present disclosure. The procedure includes the following steps S301 to S307.

At step S301, using a CRC method for detection on the physical port of the router in Fig. 5, and calculating a current bit error rate according to a ratio of the number of the received CRC error packets to the total number of packets per unit time.

At step S302, obtaining the bit error rates of the physical port calculated by the method in the previous step N consecutive times just before the current time.

At step S303, determining whether the bit error rates obtained in the N times all exceed respective preset bit error rate threshold values corresponding to line signal degradation; if so, proceeding to step S304, otherwise, returning to step S301.

At step S304, transmitting, assuming that the physical port of LSR3 in Fig. 5 generates RX-SD status and alarm, an LLDP notification packet to the peer system by the local end, where the LLDP notification packet contains a private Type Length Value (TLV) carrying an RX-SD fault generation status bit. The peer system receives the LLDP notification packet and generates transmitting direction SD (TX-SD) status and alarm.

In practice, data may be received and transmitted by a physical port on the path, or by an SG interface. In order to facilitate management of the SG interface, in an embodiment of the present disclosure, when determining whether SD occurs on the physical port, a scheme similar to that in S301 to S304 may be further used for determining SD status of the respective member ports of the SG interface, and when the SD status occurs on a member port, the SG interface is managed accordingly. The specific management method has been described in the foregoing embodiments, and is not described herein again.

As shown in Fig. 5, the LSR3 transmits an LLDP notification packet to a neighboring upstream node LSR2 to notify SD status of the physical port to the peer system.

In step S304, the LLDP notification packet may further carry the bit error rate of the physical port and be transmitted to the peer system.

After the step S304, either the local system or the peer system may continue to trigger a procedure including the following steps S305 to S307.

At step S305, notifying, when the SD status and alarm on the physical port are detected, the RX-SD status, the alarm and the bit error rate condition of the physical port (the physical port of LSR3 in Fig. 5 in the embodiment of the present disclosure) to a T-MPLS Section entity; the T-MPLS Section entity is mapped toward an inner layer of the network and to the tunnel and to the pseudowire, and notifying the SD status, the alarm and the bit error rate condition of the physical port to the tunnel and the pseudowire, and thus notifying the port indication information to an MPLS-TP OAM entity, checking a position of the MPLS-TP OAM entity in the network, and transmitting, in a case where the MPLS-TP OAM entity is in an intermediate node of the static tunnel or multi-segment pseudowire (LSR3 is the intermediate node of the tunnel LER1-LSR2-LSR3-LER4), a custom FEI packet to an end node of the static tunnel or pseudowire via an intermediate node of the static tunnel or pseudowire.

As shown in Fig. 5, LSR3 transmits a custom TP-OAM FEI packet to the downstream node LER4 (since RX-SD status is generated at LSR3, LER4 is a downstream node of LSR3), and LSR2 transmits a custom TP-OAM FEI packet to the downstream node LER1 (since TX-SD status is generated at LSR2, LER1 is considered as a downstream node of LSR2).

The custom FEI packet carries information including, but not limited to, a NODE ID of the current node (filled with a device MAC address of the current node), SD status indication (port TMS indication for an LSP FEI packet; and tunnel SD indication for a PW FEI packet), and bit error rate information. By transmitting the FEI packet at other nodes, the end node of the static tunnel or of the pseudowire knows that SD status occurs. An OpCode field in the custom FEI packet is defined as 0x60.

In an embodiment, in order for more accurate determination, accumulation of the bit error/packet error rates transmitted by the respective nodes may be performed on the end node of the static tunnel. Among all of the NODE IDs, as long as one of the NODE IDs generates a corresponding SD status, the bit error/packet error rate accumulation is not necessary, and it is determined that the static tunnel or static PW is in SD status. On the other hand, in a case where there is no SD status indication in any of the NODE IDs, an SD alarm is generated if an average of the accumulated bit error/packet error rates is greater than an SD threshold configured on a Maintenance Entity Group (MEG); and it is determined that the static tunnel or static PW is in SD status, and the static tunnel or static PW is associated to perform corresponding protection switching decision and processing.

At step S306, switching between the static tunnels through the standard specified tunnel protection group mechanism (tunnel protection group switching in Fig. 5) after the end node of the tunnel obtains the SD status and the alarm. In the static tunnel protection group, if the SD status and alarm occur on a tunnel in operation, while other tunnels do not have SD or SF status, current services on the tunnel in operation are switched to another tunnel in the static tunnel protection group that does not have SD or SF status. If both primary and backup tunnels of the static tunnels are in SD status, or the primary tunnel is in SF status, and the backup tunnel is in SD status, the tunnel protection group sets a next hop of all routes whose egress interface is the tunnel group to SD status.

At step S307, triggering pseudowire fast reroute (FW FRR), so as to switch services on respective pseudowires of the tunnel group to corresponding backup pseudowires for transmission.

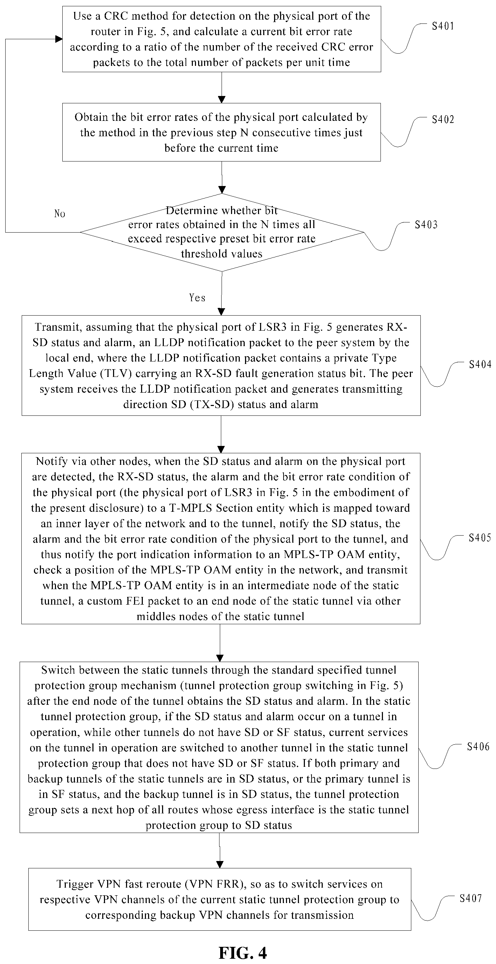

A method for sensing and handling signal degradation and fault under static manual tunnel networking in an L3VPN scenario is exemplarily described with reference to Figs. 4 and 5. Fig. 5 is a schematic diagram of SD status transfer under static tunnel networking according to an embodiment of the present disclosure. In Fig. 5, there is a Label Edge Router (LER) and a Label Switching Router (LSR). The unidirectional tunnel in Fig. 5 is a tunnel LER1-LSR2-LSR3-LER4. Fig. 5 mainly shows a tunnel transmission mode, and the SD transmission mode by the multi-segment pseudowire is similar.

Referring to Fig. 4, Fig. 4 shows a procedure of a method for handling signal degradation and fault under an L3VPN scenario in static manual tunnel scenario according to an embodiment of the present disclosure. The procedure includes the following stepsS401 to S407.

At step S401, using a CRC method for detection on the physical port of the router in Fig. 5, and calculating a current bit error rate according to a ratio of the number of the received CRC error packets to the total number of packets per unit time.

At step S402, obtaining the bit error rates of the physical port calculated by the method in the step S401 N consecutive times just before the current time.

At step S403, determining whether the bit error rates obtained in the N times all exceed respective preset bit error rate threshold values corresponding to line signal degradation; if so, proceeding to step S404, otherwise, returning to step S401.

At step S404, transmitting, assuming that the physical port of LSR3 in Fig. 5 generates RX-SD status and alarm, an LLDP notification packet to the peer system by the local end, where the LLDP notification packet contains a private Type Length Value (TLV) carrying an RX-SD fault generation status bit. The peer system receives the LLDP notification packet and generates transmitting direction SD (TX-SD) status and alarm.

As shown in Fig. 5, the LSR3 transmits an LLDP notification packet to a neighboring upstream node LSR2 to notify SD status of the physical port to the peer system.

In practice, data may be received and transmitted by a physical port on the path, or by an SG interface. In order to facilitate management of the SG interface, in an embodiment of the present disclosure, when determining whether SD occurs on the physical port, a scheme similar to that in S401 to S404 may be further used for determining SD status of the respective member ports of the SG interface, and when the SD status occurs on a member port, the SG interface is managed accordingly. The specific management method has been described in the foregoing embodiments, and is not described herein again.

In step S404, the LLDP notification packet may further carry the bit error rate of the physical port and be transmitted to the peer system.

After the step S404, either the local system or the peer system may continue to trigger a procedure including the following stepsS405 to S407.

At step S405, notifying via other nodes, when the SD status and alarm on the physical port are detected, the RX-SD status, the alarm and the bit error rate condition of the physical port (the physical port of LSR3 in Fig. 5 in the embodiment of the present disclosure) to a T-MPLS Section entity which is mapped toward an inner layer of the network and to the tunnel, notifying the SD status, the alarm and the bit error rate condition of the physical port to the tunnel, and thus notifying the port indication information to an MPLS-TP OAM entity, checking a position of the MPLS-TP OAM entity in the network, and transmitting, in a case where the MPLS-TP OAM entity is in an intermediate node of the static tunnel, a custom FEI packet to an end node of the static tunnel via other middles nodes of the static tunnel.

As shown in Fig. 5, LSR3 transmits a custom TP-OAM FEI packet to the downstream node LER4, and LSR2 transmits a custom TP-OAM FEI packet to the downstream node LER1.

The custom FEI packet carries information including, but not limited to, a NODE ID of the current node (filled with a device MAC address of the current node), SD status indication (port TMS indication for an LSP FEI packet; and tunnel SD indication for a PW FEI packet), and bit error rate information. By transmitting the FEI packet at other nodes, the end node of the static tunnel knows that SD status occurs. An OpCode field in the custom FEI packet is defined as 0x60.

In an embodiment, in order for more accurate determination, accumulation of the bit error/packet error rates transmitted by the respective nodes may be performed on the end node of the static tunnel. Among all of the NODE IDs, as long as one of the NODE IDs generates a corresponding SD status, the bit error/packet error rate accumulation is not necessary, and it is determined that the static tunnel is in SD status. On the other hand, in a case where there is no SD status indication in any of the NODE IDs, an SD alarm is generated if an average of the accumulated bit error/packet error rates is greater than an SD threshold configured on an MEG; and it is determined that the static tunnel is in SD status, and the static tunnel is associated to perform corresponding protection switching decision and processing.

At step S406, switching between the static tunnels through the standard specified tunnel protection group mechanism (tunnel protection group switching in Fig. 5) after the end node of the tunnel obtains the SD status and alarm. In the static tunnel protection group, if the SD status and alarm occur on a tunnel in operation, while other tunnels do not have SD or SF status, current services on the tunnel in operation are switched to another tunnel in the static tunnel protection group that does not have SD or SF status. If both the primary and backup tunnels of the static tunnels are in SD status, or the primary tunnel is in SF status, and the backup tunnel is in SD status, the tunnel protection group sets a next hop of all routes whose egress interface is the tunnel group to SD status.

At step S407, triggering VPN fast reroute (VPN FRR), so as to switch services on respective VPN channels of the current static tunnel protection group to corresponding backup VPN channels for transmission.

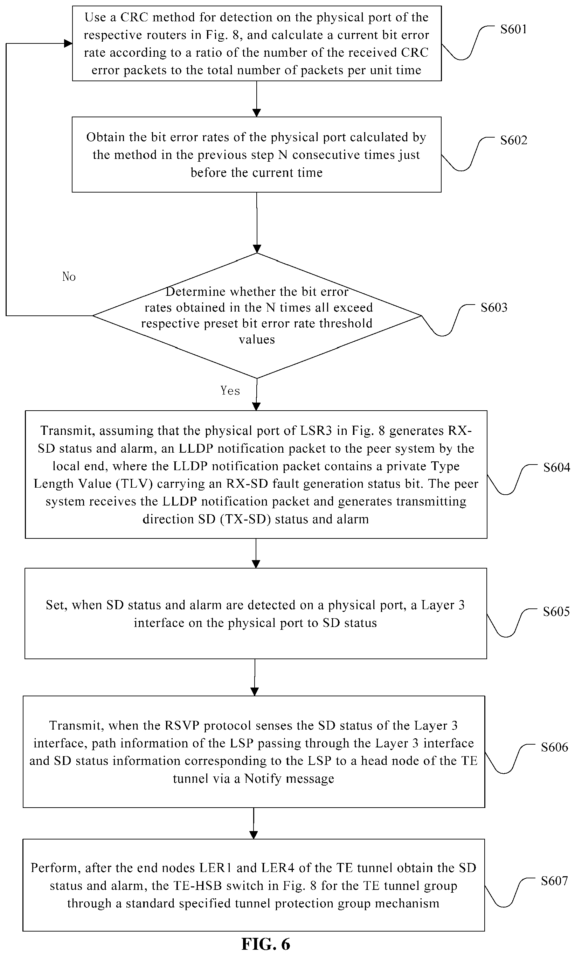

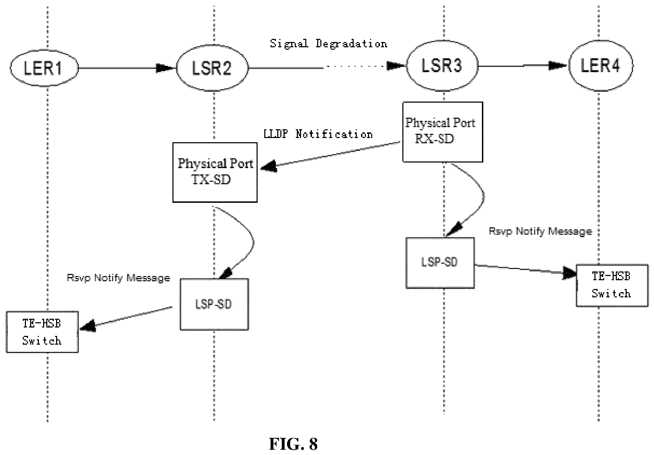

A method for sensing and handling signal degradation and fault under dynamic manual tunnel networking in an L2VPN scenario is exemplarily described below with reference to Figs. 6 and 8. Fig. 8 is a schematic diagram of SD status transfer under dynamic tunnel networking according to an embodiment of the present disclosure. In Fig. 8, there is a Label Edge Router (LER) and a Label Switching Router (LSR). The unidirectional tunnel in Fig. 8 is a tunnel LER1-LSR2-LSR3-LER4. Fig. 8 mainly shows a tunnel transmission mode, and the SD transmission mode by the multi-segment pseudowire is similar.

Referring to Fig. 6, Fig. 6 shows a procedure of a method for handling signal degradation and fault under an L2VPN scenario in dynamic tunnel networking according to an embodiment of the present disclosure. The procedure includes the following stepsS601 to S607.

At step S601, using a CRC method for detection on the physical port of the respective routers in Fig. 8, and calculating a current bit error rate according to a ratio of the number of the received CRC error packets to the total number of packets per unit time.

At step S602, obtaining the bit error rates of the physical port calculated by the method in the previous step N consecutive times just before the current time.

At step S603, determining whether the bit error rates obtained in the N times all exceed respective preset bit error rate threshold values corresponding to line signal degradation; if so, proceeding to step S604, otherwise, returning to step S601.

At step S604, transmitting, assuming that the physical port of LSR3 in Fig. 8 generates RX-SD status and alarm, an LLDP notification packet to the peer system by the local end, where the LLDP notification packet contains a private Type Length Value (TLV) carrying an RX-SD fault generation status bit. The peer system receives the LLDP notification packet and generates transmitting direction SD (TX-SD) status and alarm.

As shown in Fig. 8, the LSR3 transmits an LLDP notification packet to a neighboring upstream node LSR2 to notify SD status of the physical port to the peer system. In S604, the LLDP notification packet may further carry the bit error rate of the physical port and be transmitted to the peer system.

In practice, data may be received and transmitted by a physical port on the path, or by an SG interface. In order to facilitate management of the SG interface, in an embodiment of the present disclosure, when determining whether SD occurs on the physical port, a method similar to that in S601 to S604 may be further used for determining SD status of the respective member ports of the SG interface, and when the SD status occurs on a member port, the SG interface is managed accordingly. The specific management method has been described in the foregoing embodiments, and is not described herein again.

At step S605, setting, when SD status and alarm are detected on a physical port, a Layer 3 interface on the physical port to SD status.

At step S606, transmitting, when the RSVP protocol senses the SD status of the Layer 3 interface, path information of the LSP passing through the Layer 3 interface and SD status information corresponding to the LSP to a head node of the TE tunnel via a Notify message.

As shown in Fig. 8, after step S604, LSR2 may obtain TX-SD status of the physical port, LSR3 may obtain RX-SD status of the physical port, LSR3 transmits the RSVP Notify message to the TE tunnel end node LER4, and LSR2 transmits the RSVP Notify message to the TE tunnel head node LER1. The RSVP Notify message carries information of the LSP passing through the Layer 3 interface of the physical port and SD status of the physical port.

At step S607, performing, after the end nodes LER1 and LER4 of the TE tunnel obtain the SD status and alarm, switch on the TE tunnel group through a standard specified tunnel protection group mechanism, i.e., TE-HSB switch as shown in Fig. 8.

In the L2VPN scenario, one of the following two modes is selected for the TE-HSB switch.

Mode I: In the TE tunnel group (including the primary and backup paths), if the SD status and alarm occur on a tunnel in operation (e.g., the primary path), while other tunnels (e.g. the backup path) do not have SD or SF status, current services on the tunnel in operation are switched to another tunnel in the TE tunnel group that does not have SD or SF status. If both the primary and backup paths of the TE tunnel are in SD status, or the primary path is in SF status, and the backup path is in SD status, the TE tunnel group sets a next hop of all routes whose egress interface is the TE tunnel group to SD status. Then, pseudowire fast reroute is triggered, so as to switch services on respective pseudowires of the tunnel group to corresponding backup pseudowires for transmission.

Mode II: In the TE tunnel group (including the primary and backup paths), if all LSPs passing through the physical port are in SD status (or some are in SF status), overhead of a route whose egress interface is the L3 interface is increased to a preset overhead value. Then, pseudowire fast reroute is triggered, so as to switch services on respective pseudowires of the tunnel group to corresponding backup pseudowires for transmission.

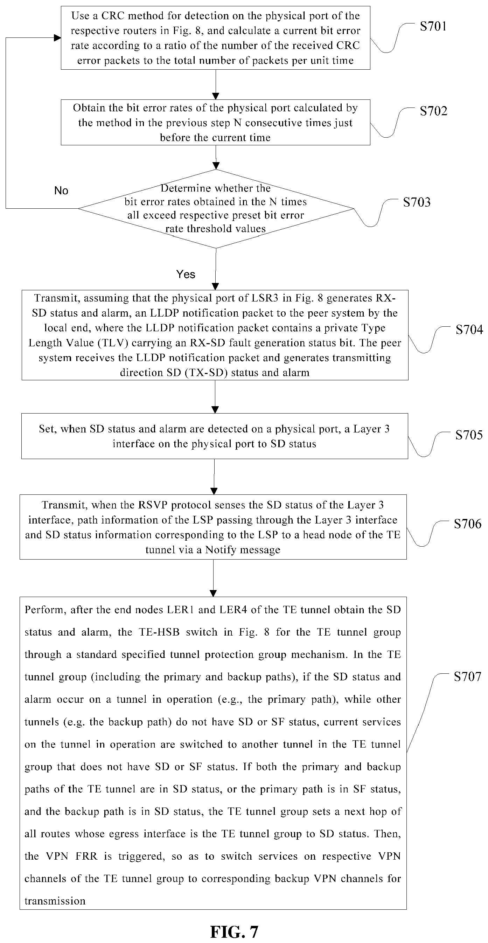

A method for sensing and handling signal degradation and fault under dynamic manual tunnel networking in an L3VPN scenario is exemplarily described below with reference to Figs. 7 and 8. Fig. 8 is a schematic diagram of SD status transfer under dynamic tunnel networking according to an embodiment of the present disclosure. In Fig. 8, there is a Label Edge Router (LER) and a Label Switching Router (LSR). The unidirectional tunnel in Fig. 8 is a tunnel LER1-LSR2-LSR3-LER4. Fig. 8 mainly shows a tunnel transmission mode, and the SD transmission mode by the multi-segment pseudowire is similar.

Referring to Fig. 7, Fig. 7 shows a procedure of a method for handling signal degradation and fault under an L3VPN scenario in dynamic tunnel networking according to an embodiment of the present disclosure. The procedure includes the following stepsS701 to S707.

At step S701, using a CRC method for detection on the physical port of the respective routers in Fig. 8, and calculating a current bit error rate according to a ratio of the number of the received CRC error packets to the total number of packets per unit time.

At step S702, obtaining the bit error rates of the physical port calculated by the method in the previous step N consecutive times just before the current time.

At step S703, determining whether the bit error rates obtained in the N times all exceed respective preset bit error rate threshold values corresponding to line signal degradation; if so, proceeding to step S704, otherwise, returning to step S701.

At step S704, transmitting, assuming that the physical port of LSR3 in Fig. 8 generates RX-SD status and alarm, an LLDP notification packet to the peer system by the local end, where the LLDP notification packet contains a private Type Length Value (TLV) carrying an RX-SD fault generation status bit. The peer system receives the LLDP notification packet and generates transmitting direction SD (TX-SD) status and alarm.

As shown in Fig. 8, the LSR3 transmits an LLDP notification packet to a neighboring upstream node LSR2 to notify SD status of the physical port to the peer system. In S704, the LLDP notification packet may further carry the bit error rate of the physical port and be transmitted to the peer system.

In practice, data may be received and transmitted by a physical port on the path, or by an SG interface. In order to facilitate management of the SG interface, in an embodiment of the present disclosure, when determining whether SD occurs on the physical port, a method similar to that in S701 to S704 may be further used for determining SD status of the respective member ports of the SG interface, and when the SD status occurs on a member port, the SG interface is managed accordingly. The specific management method has been described in the foregoing embodiments, and is not described herein again.

At step S705, setting, when SD status and alarm are detected on a physical port, a Layer 3 interface on the physical port to SD status.

At step S706, transmitting, when the RSVP protocol senses the SD status of the Layer 3 interface, path information of the LSP passing through the Layer 3 interface and SD status information corresponding to the LSP to a head node of the TE tunnel via a Notify message.

As shown in Fig. 8, after step S704, LSR2 may obtain TX-SD status of the physical port, LSR3 may obtain RX-SD status of the physical port, LSR3 transmits the RSVP Notify message to the TE tunnel end node LER4, and LSR2 transmits the RSVP Notify message to the TE tunnel head node LER1. The RSVP Notify message carries LSP information of the LSP passing through the Layer 3 interface of the physical port and SD status of the physical port.

At step S707, performing, after the end nodes LER1 and LER4 of the TE tunnel obtain the SD status and alarm, the TE-HSB switch shown Fig. 8 on the TE tunnel group through a standard specified tunnel protection group mechanism. In the TE tunnel group (including the primary and backup paths), if the SD status and alarm occur on a tunnel in operation (e.g., the primary path), while other tunnels (e.g. the backup path) do not have SD or SF status, current services on the tunnel in operation are switched to another tunnel in the TE tunnel group that does not have SD or SF status. If both the primary and backup paths of the TE tunnel are in SD status, or the primary path is in SF status, and the backup path is in SD status, the TE tunnel group sets a next hop of all routes whose egress interface is the TE tunnel group to SD status. Then, the VPN FRR is triggered, so as to switch services on respective VPN channels of the TE tunnel group to corresponding backup VPN channels for transmission.

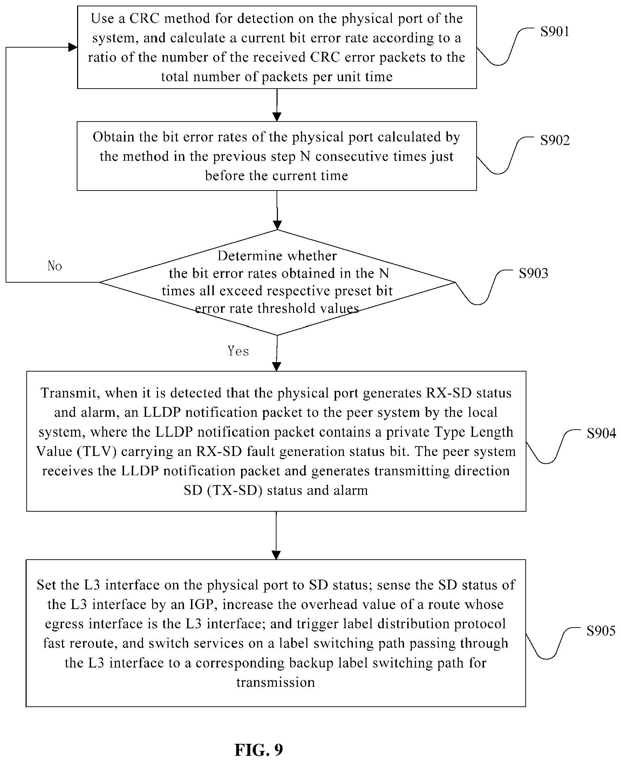

A method for handling signal degradation and fault in an IP public network, L2VPN, or L3VPN scenario using a non-tunnel networking technology such as LDP, LSP and the like is exemplarily described below with reference to Fig. 9.

Referring to Fig. 9, the method for handling signal degradation and fault includes the following steps S901 to S905.

At step S901, using a CRC method for detection on the physical port of the system, and calculating a current bit error rate according to a ratio of the number of the received CRC error packets to the total number of packets per unit time.

At step S902, obtaining the bit error rates of the physical port calculated by the method in the previous step N consecutive times just before the current time.

At step S903, determining whether the bit error rates obtained in the N times all exceed respective preset bit error rate threshold values corresponding to line signal degradation; if so, proceeding to step S904, otherwise, returning to step S901.

In practice, since many paths have multi-link binding, and SD status may also occur at an SG interface, a Link Aggregation Control Protocol (LACP) is needed to manage the SG binding links. The above steps S901 to S903 are employed to determine whether member ports of the SG interface have SD status.

When it is detected that a member port is in SD status, a forwarding plane directly sets the member physical port to a Block status, causing interruption of protocol interaction packets of the LACP on that member port, and the member port to be moved out of the LAG forwarding. Alternatively, if the number of available aggregated links is greater than a minimum number of member links, the member physical port in the SD status is moved out of the LAG forwarding, thereby ensuring that no SD exists on the path used by the service.

If the number of available aggregated links is equal to the minimum number of member links, the member physical port in the SD status is kept in the SG interface for continuous use, and the SG interface is set to SD status so that an upper layer service can sense that the path has the SD status.

If SF status is generated on a member port of the SG interface, and the number of available aggregated links is equal to the minimum number of member links, the member physical port in the SD status is moved into the SG interface to replace the member physical port in the SF status, while the SG interface is set to SD status.

At step S904, transmitting, when it is detected that the physical port generates RX-SD status and alarm, an LLDP notification packet to the peer system by the local system, where the LLDP notification packet contains a private Type Length Value (TLV) carrying an RX-SD fault generation status bit. The peer system receives the LLDP notification packet and generates transmitting direction SD (TX-SD) status and alarm.

In step S904, the LLDP notification packet may further carry the bit error rate of the physical port and be transmitted to the peer system.

After the step S904, either the local system or the peer system may continue to trigger a procedure including the following steps.

At step S905, setting the L3 interface on the physical port to SD status; sensing the SD status of the L3 interface by an IGP, increasing the overhead value of a route whose egress interface is the L3 interface, where the increased value is configured by the user, or the overhead value is directly adjusted to be the maximum overhead value (65535 for an ospf protocol, and 16777214 for an isis protocol); and triggering label distribution protocol fast reroute, and switching services on a label switching path passing through the L3 interface to a corresponding backup label switching path for transmission.

The embodiment of the disclosure discloses how to determine and handle path signal degradation when tunnel networking and non-tunnel networking are adopted in an IP public network, L2VPN or L3VPN scenario, which makes up for the lack of a method for sensing and processing signal degradation and fault. The method is a good compensation for the defects of BFD or TP-OAM handling method. In an embodiment, the deployment requirements for services sensitive to line signal degradation are satisfied.

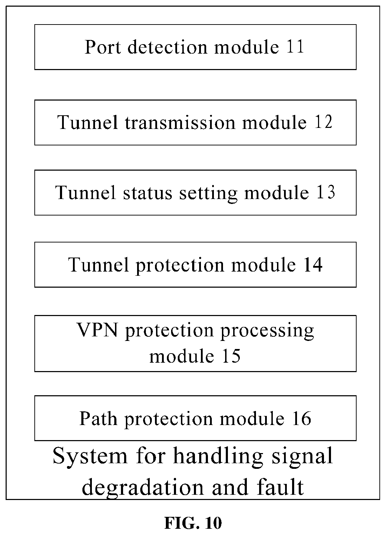

Referring to Fig. 10, an embodiment of the present disclosure shows a schematic diagram of a system for handling signal degradation and fault, the system including: a port detection module 11, a tunnel transmission module 12, a tunnel status setting module 13, a tunnel protection module 14, a VPN protection processing module 15 and a path protection module 16.

The port detection module 11 is configured to obtain a bit error condition of a physical port, determine whether the physical port satisfies a preset signal degradation determination condition according to the bit error condition; and if yes, generate port indication information indicating signal degradation of the physical port.

The tunnel transmission module 12 is configured to transmit the port indication information to an end node of a tunnel in a case where a network to which the physical port belongs is networked by a tunnel networking technology, the physical port being located at the tunnel.

The tunnel status setting module 13 is configured to determine, in a case where an end node of a certain tunnel receives the port indication information, that the tunnel is in signal degradation status.

The tunnel protection module 14 is configured to obtain status of primary and backup tunnels in each tunnel group.

The VPN protection processing module 15 is configured to, when a certain tunnel group satisfies the condition that the primary tunnel is in signal degradation status or signal interruption status and the backup tunnel is in signal degradation status, trigger pseudowire fast reroute in a case where the network is an L2VPN network, so as to switch services on respective pseudowires of the tunnel group to corresponding backup pseudowires for transmission; and trigger VPN fast reroute in a case where the network is an L3VPN network, so as to switch services on respective VPN channels of the tunnel group to corresponding backup VPN channels for transmission.

The path protection module 16 is configured to determine, in a case where the network to which the physical port belongs is networked by a non-tunnel networking technology, an L3 interface on the physical port, trigger label distribution protocol fast reroute, and switch services on a label switching path passing through the L3 interface to a corresponding backup label switching path for transmission.

The bit error condition in the embodiment of the disclosure reflects quality of a physical path on the physical port, and the bit error condition may be evaluated by indexes such as a bit error rate, a packet error rate and the like.

In an embodiment, the port detection module 11 is configured to: obtain bit error rates of the physical port N consecutive times just before the current time; determine that the physical port satisfies the preset signal degradation determination condition in a case where the bit error rates obtained in the N times all exceed a preset bit error rate threshold value corresponding to line signal degradation; and determine otherwise that the physical port does not satisfy the signal degradation determination condition. or configured to: obtain packet error rates of the physical port in N (N is greater than or equal to a preset quantity value) different time periods traced back from the current moment, and determine that the physical port satisfies the preset signal degradation determination condition in a case where the packet error rate in at least a certain time period is greater than or equal to a preset packet error rate threshold corresponding to the time period; determine otherwise that the physical port does not satisfy the signal degradation determination condition.

In an embodiment, the system further includes a port SD status cancellation module. The port detection module 11 is further configured to, after generating the port indication information indicating signal degradation of the physical port, continue to obtain the bit error condition of the physical port, and determining whether none of the bit error rates of the physical port in M consecutive times (M is a value more than at least a preset times (e.g., 100 times) of N) reaches the preset bit error rate threshold values. The port SD status cancellation module is configured to cancel the port indication information indicating signal degradation of the physical port when the determination result from the port detection module 11 is yes. Specifically, the physical port is set to non-SD status, and SD status cancellation information is transmitted to the peer system.

Alternatively, the port detection module 11 is further configured to, after generating the port indication information indicating signal degradation of the physical port, continue to obtain the packet error rates of the physical port in S (S is greater than or equal to a preset quantity value) different time periods traced back from the current moment, and determine whether the packet error rate in each time period is less than a preset packet error rate threshold corresponding to the time period. The port SD status cancellation module is configured to cancel the port indication information indicating signal degradation of the physical port when the determination result from the port detection module 11 is yes. Specifically, the physical port is set to non-SD status, and SD status cancellation information is transmitted to the peer system.

In an embodiment, the tunnel protection module 14 is further configured to, when a certain tunnel group satisfies the condition that the primary tunnel is in signal degradation status or signal interruption status and the backup tunnel is in signal degradation status, set a next hop of all routes whose egress interface is the tunnel group to signal degradation status before the VPN protection processing module 15 triggers the pseudowire fast reroute or VPN fast reroute.

In an embodiment, the port detection module 11 in the embodiment of the present disclosure is further configured to, while obtaining a bit error condition of a physical port and determining whether the physical port satisfies a preset signal degradation determination condition according to the bit error condition, obtain bit error conditions of respective member ports of an Ethernet binding port, determine whether the respective member ports satisfy a preset signal degradation determination condition according to the bit error condition, and if yes, set the member ports to Block status; or, move, in a case where the number of aggregated links available on the Ethernet binding port is greater than a minimum number of member links, the member ports out of the link aggregation group; reserve, in a case where the number of aggregated links available on the Ethernet binding port is equal to the minimum number of member links, the member ports in the link aggregation group for continuous use, and set the Ethernet binding port to signal degradation status; and wherein, if signal interruption status of other member ports of the Ethernet binding port is also detected, move, in a case where the number of aggregated links available on the Ethernet binding port is equal to the minimum number of member links, the member ports satisfying the preset signal degradation determination condition into the link aggregation group to replace the member ports in the signal interruption status, and set the Ethernet binding port to signal degradation status.

The tunnel transmission module 12 is configured to: notify, in a case where the network is networked by a static tunnel networking technology, the port indication information of the physical port to a T-MPLS Section entity which is mapped toward an inner layer of the network and to the tunnel; notify the port indication information of the physical port to a tunnel, and thus notify the port indication information to an MPLS-TP OAM entity; check a position of the MPLS-TP OAM entity in the network, and transmit, in a case where the MPLS-TP OAM entity is in an intermediate node of the static tunnel, a preset custom packet to the static tunnel via other nodes of the static tunnel, wherein the preset custom packet carries the node ID of the node and the signal degradation status indication information.

In the L2VPN, the static tunnel is further provided with a pseudowire. When the SD needs to be sensed by the pseudowire, the tunnel transmission module 12 is further configured to perform a mapping from the tunnel to the pseudowire, and notify the pseudowire of the port indication information of the physical port. If the TP-OAM entity is in an intermediate node of the pseudowire, a preset custom packet is transmitted to the end node of the pseudowire via other nodes of the pseudowire, wherein the preset custom packet carries the node ID of the node and the signal degradation status indication information.

The tunnel transmission module 12 is configured to: set, in a case where the network is networked by a tunnel networking technology, the L3 interface on the port to signal degradation status; set the label switching path passing through the L3 interface to signal degradation status; and transmit a message with a preset format and containing information indicating signal degradation of the label switching path to a head node of the tunnel at which tunnel the physical port is located.

In an embodiment, the tunnel transmission module 12 in the embodiment of the present disclosure is further configured to transmit, after the port indication information indicating signal degradation of the physical port is generated, the port indication information of the physical port of a local system to a peer system in a line transmitting direction via a preset protocol packet.

In an embodiment, the system of the embodiment of the present disclosure further includes a routing overhead setting module. The routing overhead setting module is configured to: set, in a case where the network to which the physical port belongs is networked by a tunnel networking technology and after it is determined that the tunnel is in signal degradation status, a logical tunnel port corresponding to the tunnel to SD status, and increase overhead of a route whose egress interface is the logical tunnel port to a preset overhead value; set, in a case where the network to which the physical port belongs is networked by a non-tunnel networking technology and after the port indication information indicating signal degradation of the physical port is generated, the L3 interface on the physical port to signal degradation status, and increase overhead of a route whose egress interface is the L3 interface to a preset overhead value.

In an embodiment of the present disclosure, the port detection module 11 is further configured to detect, before it is determined that the tunnel or the tunnel which the pseudowire belongs to is in signal degradation status, whether a routing path where the physical port is located has signal fault status, and if no, detect whether signal degradation status is generated on the routing path where the physical port is located. The tunnel protection module 14 is further configured to perform, in a case where the detection result shows that the routing path has signal fault status, processing according to a procedure corresponding to the SF status; perform otherwise, in a case where the detection result shows that the signal degradation status is generated on the routing path, processing according to a procedure corresponding to the SD status.

In order to avoid the influence of small service traffic on the physical path on the bit error rate or the packet error rate, the system of the embodiment of the present disclosure further includes: a background flow packet transmission module.

The background flow packet transmission module is configured to obtain service traffic on a physical path before the port detection module 11 obtain the bit error condition of the physical port, and transmit, in a case where the service traffic is smaller than a preset traffic threshold, background flow packets with a preset fixed format on the physical path, wherein a maximum transmitting quantity of the background flow packets does not exceed a preset proportion of a bandwidth of the physical port.

Apparently, it will be appreciated that if the number of normal traffic packets on the path transmitting the background flow increases (e.g., exceeds 30% of the port bandwidth), the transmission of background flow packets may be stopped.

By adopting the system of the embodiment of the disclosure and collaboration of the above modules, determination and handling of path signal degradation when tunnel networking and non-tunnel networking are adopted in an IP public network, L2VPN or L3VPN scenario, which makes up for the lack of a method for sensing and processing signal degradation and fault. In an embodiment, the deployment requirements for services sensitive to line signal degradation are satisfied.

The present disclosure further provides a device for handling signal degradation and fault, including a processor and a memory, the memory having a program code stored thereon which, when executed by the processor, causes the method for handling signal degradation and fault according to the embodiments of the present disclosure to be implemented.

The present disclosure further provides a computer readable storage medium having one or more programs stored thereon which, when executed by a processor, causes the method for handling signal degradation and fault according to the embodiments of the present disclosure to be implemented.

Apparently, those skilled in the art should appreciate that the respective modules and steps in the embodiments of the present disclosure can be realized using a general-purpose computing device; they can be integrated in a single computing device, or can be distributed on a network that consists of a plurality of computing devices. The various modules or steps may be implemented by a program code executable by a computing device so that they can be stored on a computer storage medium (an ROM/RAM, a magnetic disk, or an optical disk) and executed by the computing device, and in some cases, the steps shown or described may be performed in an order different than that described herein. Alternatively, the respective modules and steps may be implemented by being made into respective integrated circuit modules, or many or part of the modules or steps may be implemented by being made into a single integrated circuit module. In this way, the present disclosure is not restricted to any particular hardware and software combination.

The above are further detailed explanation of the embodiments of the present disclosure in conjunction with specific embodiments, and the present disclosure is not to be construed as being limited to these embodiments. For those skilled in the art to which the disclosure pertains, several simple deductions or substitutions may be made without departing from the concept of the disclosure, and all such deductions or substitutions shall be considered as falling within the scope of the disclosure.

## Claims

1. A method for handling signal degradation and fault, comprising the steps of:
obtaining a bit error condition of a physical port, determining whether the physical port satisfies a preset signal degradation determination condition according to the bit error condition, and if yes, generating port indication information indicating signal degradation of the physical port;
transmitting the port indication information to an end node of a tunnel at which tunnel the physical port is located in a case where a network to which the physical port belongs is networked by a tunnel networking technology;
determining, in a case where an end node of a certain tunnel receives the port indication information, that the tunnel is in signal degradation status;
obtaining status of primary and backup tunnels in each tunnel group, and, when a certain tunnel group satisfies the condition that the primary tunnel is in signal degradation status or signal interruption status and the backup tunnel is in signal degradation status, triggering pseudowire fast reroute in a case where the network is an Layer 2 Virtual Private Network, L2VPN network, so as to switch services on respective pseudowires of the tunnel group to corresponding backup pseudowires for transmission, and triggering VPN fast reroute in a case where the network is an Layer 3 Virtual Private Network, L3VPN network, so as to switch services on respective VPN channels of the tunnel group to corresponding backup VPN channels for transmission; and
determining, in a case where the network to which the physical port belongs is networked by a non-tunnel networking technology, an Layer 3, L3 interface on the physical port, triggering label distribution protocol fast reroute, and switching services on a label switching path passing through the L3 interface to a corresponding backup label switching path for transmission.

2. The method for handling signal degradation and fault according to claim 1, wherein the step of obtaining the bit error condition of the physical port, and determining whether the physical port satisfies the preset signal degradation determination condition according to the bit error condition comprises:
obtaining bit error rates of the physical port N consecutive times just before the current time, and determining that the physical port satisfies the preset signal degradation determination condition in a case where the bit error rates obtained in the N times all exceed a preset bit error rate threshold value corresponding to line signal degradation, determining otherwise that the physical port does not satisfy the preset signal degradation determination condition;
or obtaining packet error rates of the physical port in N (N is greater than or equal to a preset quantity value) different time periods traced back from the current moment, and determining that the physical port satisfies the preset signal degradation determination condition in a case where the packet error rate in at least a certain time period is greater than or equal to a preset packet error rate threshold corresponding to the time period, determining otherwise that the physical port does not satisfy the preset signal degradation determination condition; and wherein
after the step of generating the port indication information indicating signal degradation of the physical port, the method further comprises the steps of:
continuing to obtain the bit error condition of the physical port, and in a case where each of the bit error rates of the physical port in M consecutive times (M is a value more than at least a preset times of N) is less than the preset bit error rate threshold value, cancelling the port indication information indicating signal degradation of the physical port;
or continuing to obtain the packet error rates of the physical port in S (S is greater than or equal to a preset quantity value) different time periods traced back from the current moment, and in a case where the packet error rate in each time period is less than a preset packet error rate threshold corresponding to the time period, cancelling the port indication information indicating signal degradation of the physical port.

3. The method for handling signal degradation and fault according to claim 1, wherein when a certain tunnel group satisfies the condition that the primary tunnel is in signal degradation status or signal interruption status and the backup tunnel is in signal degradation status, before the step of triggering pseudowire fast reroute or triggering VPN fast reroute, the method further comprises:
setting a next hop of all routes whose egress interface is the tunnel group to signal degradation status.

4. The method for handling signal degradation and fault according to claim 1, wherein the step of obtaining the bit error condition of the physical port, and determining whether the physical port satisfies the preset signal degradation determination condition according to the bit error condition further comprises:
obtaining bit error conditions of respective member ports of an Ethernet binding port, determining whether the respective member ports satisfy a preset signal degradation determination condition according to the bit error conditions, and if yes, setting the member ports to Block status;
or moving, in a case where the number of aggregated links available on the Ethernet binding port is greater than a minimum number of member links, the member ports out of the link aggregation group, and reserving, in a case where the number of aggregated links available on the Ethernet binding port is equal to the minimum number of member links, the member ports in the link aggregation group for continuous use, and setting the Ethernet binding port to signal degradation status;
and wherein in a case where signal interruption status of other member ports of the Ethernet binding port is detected, and the number of aggregated links available on the Ethernet binding port is equal to the minimum number of member links, the member ports satisfying the preset signal degradation determination condition are moved into the link aggregation group to replace the member ports in the signal interruption status, and the Ethernet binding port is set to signal degradation status.

5. The method for handling signal degradation and fault according to claim 1, wherein the step of transmitting the port indication information to the end node of the tunnel at which tunnel the physical port is located in a case where the network is networked by a static tunnel networking technology comprises:
transmitting the port indication information to a T-MPLS Section entity which is mapped toward an inner layer of the network and to the tunnel, transmitting the port indication information of the physical port to the tunnel, and thus notifying the port indication information to an Multi-Protocol Label Switching-Transport Profile Operation Administration and Maintenance, MPLS-TP OAM entity, checking a position of the MPLS-TP OAM entity in the network, and transmitting, in a case where the MPLS-TP OAM entity is in an intermediate node of the tunnel, a preset custom packet carrying the node ID of the intermediate node and the signal degradation status indication information to the end node of the tunnel via other nodes; and
the step of transmitting the port indication information of the physical port to the end node of the tunnel at which tunnel the physical port is located in a case where a network to which the physical port belongs is networked by a dynamic tunnel networking technology comprises:
setting the L3 interface on the port to signal degradation status, setting the label switching path passing through the L3 interface to signal degradation status, and transmitting a message with a preset format and containing information indicating signal degradation of the label switching path to a head node of the tunnel at which tunnel the physical port is located.

6. The method for handling signal degradation and fault according to any one of claims 1 to 5, wherein after the step of generating the port indication information indicating signal degradation of the physical port, the method further comprises: transmitting the port indication information of the physical port of a local system to a peer system in a line transmitting direction via a preset protocol packet.

7. The method for handling signal degradation and fault according to any one of claims 1 to 5, wherein in a case where the network to which the physical port belongs is networked by a tunnel networking technology, after the step of determining that the tunnel is in signal degradation status, the method further comprises: setting a logical tunnel port corresponding to the tunnel to signal degradation status, and increasing overhead of a route whose egress interface is the logical tunnel port to a preset overhead value; and
in a case where the network to which the physical port belongs is networked by a non-tunnel networking technology, after the step of generating the port indication information indicating signal degradation of the physical port, the method further comprises: setting the L3 interface on the physical port to signal degradation status; and increasing overhead of a route whose egress interface is the L3 interface to a preset overhead value.

8. The method for handling signal degradation and fault according to any one of claims 1 to 5, wherein before the step of determining that the tunnel is in signal degradation status, the method further comprises:
detecting whether a routing path where the physical port is located generates signal interruption status, performing processing, in a case where signal interruption status is generated, according to a procedure corresponding to the signal interruption status, and checking, in a case where signal interruption status is not generated, whether signal degradation status is generated on the routing path, wherein corresponding procedure is performed if signal degradation status is generated on the routing path.

9. The method for handling signal degradation and fault according to any one of claims 1 to 5, wherein before the step of obtaining the bit error condition of the physical port, the method further comprises:
obtaining service traffic on a physical path where the physical port is located, and transmitting, in a case where the service traffic is smaller than a preset traffic threshold, background flow packets with a preset fixed format on the physical path, wherein a maximum transmitting quantity of the background flow packets does not exceed a preset proportion of a bandwidth of the physical port.

10. A system for handling signal degradation and fault, comprising:
a port detection module configured to obtain a bit error condition of a physical port, determine whether the physical port satisfies a preset signal degradation determination condition according to the bit error condition; and if yes, generate port indication information indicating signal degradation of the physical port;
a tunnel transmission module configured to transmit the port indication information to an end node of a tunnel in a case where a network to which the physical port belongs is networked by a tunnel networking technology, the physical port being located at the tunnel;
a tunnel status setting module configured to determine, in a case where an end node of a certain tunnel receives the port indication information, that the tunnel is in signal degradation status;
a tunnel protection module configured to obtain status of primary and backup tunnels in each tunnel group;
a VPN protection processing module configured to, when a certain tunnel group satisfies the condition that the primary tunnel is in signal degradation status or signal interruption status and the backup tunnel is in signal degradation status, trigger pseudowire fast reroute in a case where the network is an L2VPN network, so as to switch services on respective pseudowires of the tunnel group to corresponding backup pseudowires for transmission; and trigger VPN fast reroute in a case where the network is an L3VPN network, so as to switch services on respective VPN channels of the tunnel group to corresponding backup VPN channels for transmission; and
a path protection module configured to determine, in a case where the network to which the physical port belongs is networked by a non-tunnel networking technology, an L3 interface on the physical port, trigger label distribution protocol fast reroute, and switch services on a label switching path passing through the L3 interface to a corresponding backup label switching path for transmission.

11. A device for handling signal degradation and fault, comprising a processor and a memory, the memory having a program code stored thereon which, when executed by the processor, causes the method for handling signal degradation and fault according to any one of claims 1 to 9 to be implemented.

12. A computer readable storage medium having one or more programs stored thereon which, when executed by a processor, causes the method for handling signal degradation and fault according to any one of claims 1 to 9 to be implemented.
